# EUROPEAN PATENT SPECIFICATION

(11) **EP 4 484 846 B1**
(45) Date of publication and mention of the grant of the patent: **26.11.2025**
(21) Application number: 23181991.3
(22) Date of filing: 28.06.2023
(51) Int. Cl.: F24H 1/10, F24H 1/00, B60H 1/22, F24H 1/12, F24H 9/00, H05B 3/00, H05B 3/42

(54) **FLOW HEATER**
DURCHLAUFERHITZER
CHAUFFE-EAU

(43) Date of publication of application: 01.01.2025
(73) Proprietor: BORGWARNER EMISSIONS SYSTEMS SPAIN, S.L.U., 36315 Vigo, Pontevedra (ES)
(72) Inventor: Perez, José Manuel, 36315 Vigo (ES); Carvalho, Luís, 36315 Vigo (ES); Camelo, Javier, 36350 Vigo (ES)
(74) Representative: Twelmeier Mommer & Partner

(56) References cited:
- US-A1- 2022 003 455
- US-A1- 2022 082 297
- US-A1- 2022 099 336
- US-B2- 11 571 950

## Description

The invention refers to a flow heater for heating liquids. A flow heater with the characteristics listed in the preamble of claim 1 is disclosed in US 2022/0082297 A1.

Flow heaters are needed, for example, in automobiles to heat various liquids, in particular water and aqueous solutions. Constant goals in the development of flow heaters for automobiles are a compact design, low manufacturing costs, and a high efficiency.

An object of the present invention is to provide a flow heater that achieves these goals to a greater extent.

This object is achieved by a flow heater according to claim 1. Advantageous refinements of the invention are the matter of dependent claims.

A flow heater according to the present invention comprises a channel for liquid to be heated that is arranged between a heating plate and an inner wall that has at least one section that is slanted with respect to the heating plate. Accordingly, the channel has a first wedge-shaped section adjacent to the inlet and a second wedge-shaped section adjacent to the outlet, both wedge-shaped sections tapering from an end of the heating plate adjacent to the inlet and the outlet to an opposite end. The wedge-shaped sections are connected by a middle section of the flow channel, in which the direction of flow is crosswise to the direction of flow in the wedge-shaped sections.

Along the length of the first wedge-shaped section of the channel liquid to be heated enters the middle section of the flow channel and flows in the middle section in a direction crosswise to the length of the first tapering section. Thus only a small fraction of the liquid to be heated reaches the end of the first wedge-shaped section. The rest of the liquid enters the middle section along the way. Likewise, the amount of liquid inside the second wedge-shaped section increases in a direction towards the outlet as liquid enters the second wedge-shaped section along the way. Such a channel allows very large amounts of liquid to be heated efficiently in a short time.

The compactness of design enabled by the channel arranged as explained above is further improved by arranging the printed circuit board slanted with respect to the heating plate in a wedge-shaped space defined by the inner wall section and a cover part of the housing. Thereby the length of the circuit board can be greater than the length of the housing. Moreover, by arranging small, flat components of an end section of the circuit board on an end section adjacent to the inlet and the outlet and large components, like capacitors, on an opposite end section, the volume enclosed by the housing can be used very efficiently resulting in a very compact flow heater.

The above mentioned aspects of exemplary embodiments will become more apparent and will be better understood by reference to the following description of embodiments taken in conjunction with the accompanying drawings, wherein:
Fig. 1 shows a flow heater according to the present invention;
Fig. 2 a sectional view of the flow heater along line AA;
Fig. 3 a sectional view of the flow heater along line CC;
Fig.4 a sectional view of the flow heater along line BB with arrows indicating the direction of flow of liquid;
Fig. 5 a sectional view of another embodiment of a flow heater not belonging to the invention, i.e. outside of the attached claims; and
Fig. 6 a sectional view of another embodiment of a flow heater not belonging to the invention, i.e. outside of the attached claims.

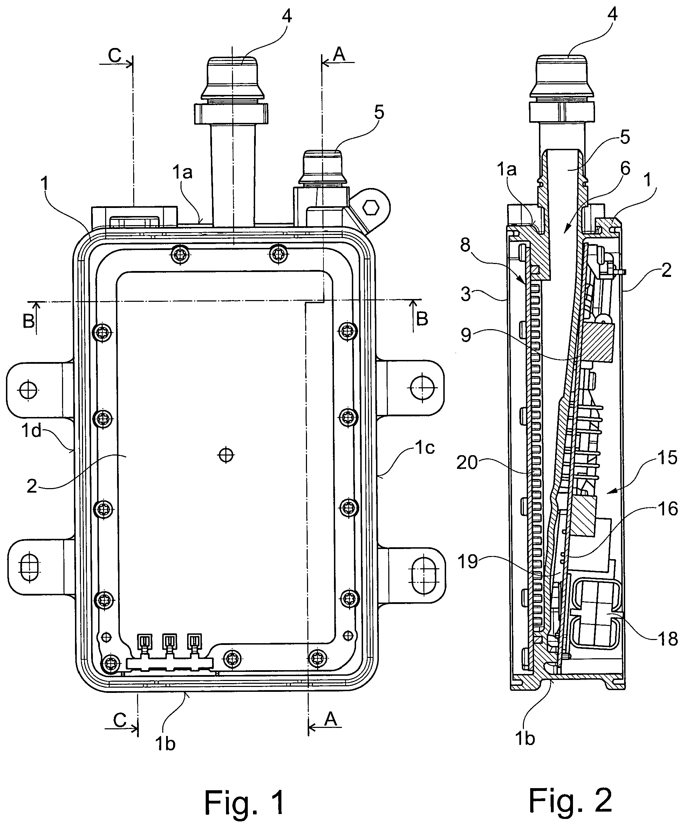

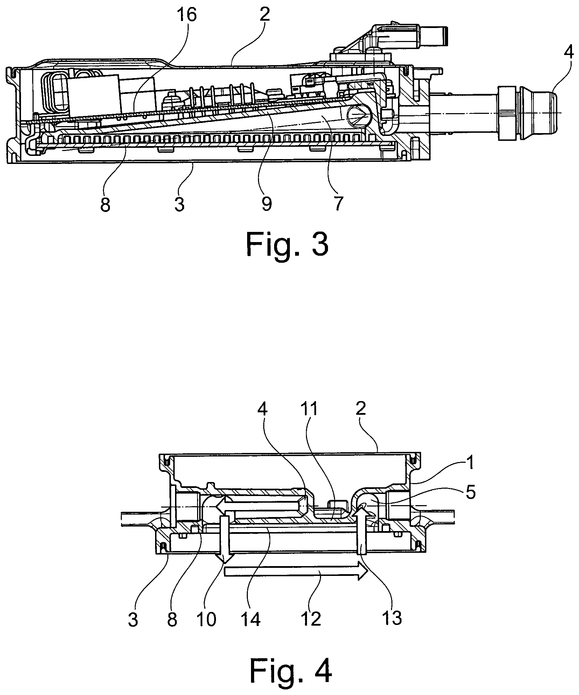

Fig. 1 shows a flow heater. The same flow heater is shown in a sectional view along line AA in fig. 2, in sectional view along line CC in fig. 3 and schematically in a sectional view along line BB in fig. 3.

The flow heater comprises a housing have a base part 1, a first cover part 2, and a second cover part 3. The housing may be cuboid shaped as shown in the figures. The base part 1 has two opposing short sides 1a, 1b and two opposing long sides 1c, 1d, said two short sides 1a, 1b and said two long sides 1c, 1d are arranged between both cover parts 2, 3.

The base part 1 is provided with an inlet 4 and an outlet 5, e.g. in one of the short sides 1a of the base part 1. Liquid to be heated flows through a channel inside the housing from the inlet 4 to the outlet 5. The sectional view of fig. 2 shows an end section 6 of the channel, which is adjacent to the outlet 5, and the sectional view of fig. 3 shows another section 7 of the channel, said section being downstream of the inlet 4. Sections 6 and 7 of the flow channel are arranged between and delimited by a heating plate 8 and a section of an inner wall 9 of the housing. This inner wall 9 is part of the base part 1 and may be integral with it.

As can be seen in figures 2 and, a section of the inner wall 9 is slanted with respect to the heating plate 8. The end section 6 of the channel is wedge-shaped. The channel section 6 is tapering in a direction away from the outlet 5 and the channel section 7 is tapering away from the inlet 4.

In fig. 4, the course of the channel is illustrated schematically with arrows. Liquid to be heated flows from the inlet 4 to the left in fig. 3 and then along a wedge-shaped section which is not shown in the figures, but formed like end section 6. Flow through this wedge- shaped section is indicated in fig. 4 with a downward arrow 10. Liquid flows from this wedge-shaped section into a middle section 14 of the channel that is delimited on one side by the heating plate 8 and on an opposite side by a section 11 of inner wall 9. Flow in this section is illustrated in fig. 4 by arrow 12. Note that arrow 12 is shown outside of the housing for reasons of space, but that the middle section of the flow channel is of course inside the housing. The middle section 14 of the channel leads to the end section 6 of the flow channel shown in fig. 2 and depicted by arrow 13 in fig. 4.

Fig. 4 is limited to details essential for understanding the course of the channel. Hence, printed circuit board 16 and other details shown in fig. 2 are not shown in fig. 3.

The wedge-shaped section 7 downstream of the inlet 4 is also called the first wedge-shaped section and the wedge-shaped section 6 leading to outlet 5 is also called the second wedge-shaped section. Both wedge-shaped sections are connected by middle section 14 which may have a constant height as measured perpendicular to the heating plate 8. The direction of flow in the wedge-shaped sections 6 is crosswise, e.g. perpendicular, to the direction of flow in the middle section 14. Fins 20 that are in contact with the heating plate 8 are arranged in the channel, especially in the middle section 14 of the channel.

The fins 20 may be corrugated sheet metal connected to the heating plate 8, e.g. by brazing. The heating plate 8 is provided with heating resistors, e.g. resistive tracks, arranged on a substrate. The substrate may be a metal plate covered by a dielectric layer on which resistive tracks are arranged as heating resistors, especially on a side of the substrate facing away from fins 20.

The inner wall 9 delimiting the heating channel may have a middle section 11 parallel to the heating plate 8 and on both sides of this middle section 11 a slanted section as shown in fig. 4. Then the middle section 14 of the channel has a constant height, while the sections 6, 7 on both sides of the middle section, are wedge-shaped. These wedge-shaped sections 6, 7 of the flow channel taper towards the end of the heating plate 8 facing away from the inlet 4 and the outlet 5.

Both cover parts 2, 3 and the heating plate 8 are parallel to each other. Parallel here means that any deviation from a geometrical perfect parallel orientation is within manufacturing tolerances.

As fig. 2 shows, the slanted section 9 of the inner wall and the first cover part 2 of the housing define a wedge-shaped space 15 that tapers in a direction that is opposite to the direction in which the first and second wedge-shaped section 6 of the channel taper. Inside this wedge-shaped space 15 is a printed circuit board 16 with control electronics. This printed circuit board 16 is slanted with respect to the heating plate 8 and also slanted with respect to the cover parts 2, 3. Thereby, a longer printed circuit board 16 can be arranged in the housing as would be possible if it were oriented in parallel to the heating plate 8 and the cover parts 2, 3. Moreover, by the slanted arrangement of the printed circuit board 16 in the wedge-shaped space the distance from the printed circuit board 16 to the first cover 2 increases from an end of the printed circuit board 16 adjacent to the inlet 4 and the outlet 5 to an opposite end of the printed circuit board 16. At the end of the printed circuit board 16 there is therefore enough space for mounting large components, like e.g. capacitors 18, on the printed circuit board 16, whereas the other end may be used for smaller components of the control electronics.

The printed circuit board 16 and the heating plate 8 enclose an acute angle which may be 3° to 10° for example. As can be seen in fig. 2, there may be wedge-shaped gap 19 between the printed circuit board 16 and the slanted section of the inner wall 9. This wedge-shaped gap 19 may taper in a direction opposite to the direction of tapering of the wedge-shaped space 15, in which the printed circuit board 16 is arranged. Thus the gap 19 tapers towards the inlet 4 and the outlet 5.

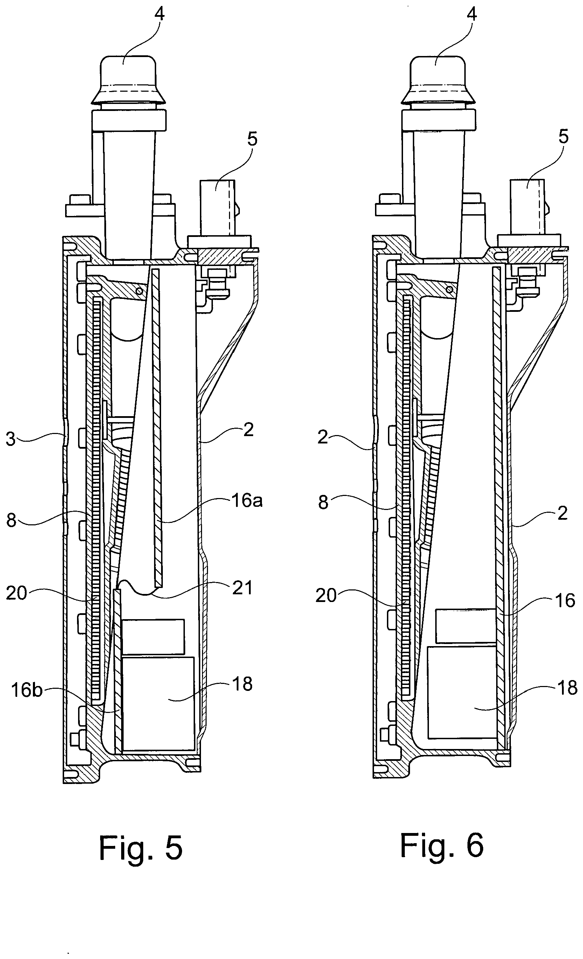

In figures 5 and 6 further embodiments of a flow heater not being part of the invention are shown in a sectional view according to fig. 2. Identical and corresponding components of the flow heaters of all embodiments are designated with identical reference numerals in the various figures. The embodiments shown in figures 4 and 5 differ from the embodiment explained mostly in the printed circuit board 16. Whereas in the embodiment of fig. 2 the printed circuit board 16 is slanted with respect to the heating plate 8, two separate, smaller circuit boards 16a, 16b are used in the embodiment of fig. 5 which are electrically connected by means of an electrical conductor 21, e.g. a wire. In the embodiment shown in fig. 6 a single printed circuit board 16 is used that is arranged in parallel with the heating plate 8. Large components of the control electronic, e.g. a capacitor 18, are arranged on an end of the printed circuit 16 board facing away from the inlet 4 and the outlet 5 and on a surface of the printed circuit board 16 facing away from the first cover part 2.

The embodiment shown in fig. 6 refers to a flow heater, comprising a housing comprising a base part 1 and a cover part 2, a channel for liquid to be heated, which extends from an inlet 4 to an outlet 5, a heating plate 8 adjacent to the channel, fins 20 arranged in the channel in contact with the heating plate 8, and a printed circuit board 16 arranged between an inner wall 9 of the housing and the cover part 2, wherein the inner wall 9 has at least one section that is slanted with respect to the heating plate 8, between the heating plate 8 and the inner wall 9 the channel has a first wedge-shaped section downstream of the inlet and a second wedge-shaped section 6 leading to the outlet 5, both wedge-shaped sections tapering from an end of the heating plate 8 adjacent to the inlet 4 and the outlet 5 to an opposite end, wherein said wedge-shaped sections are connected by a middle section of the flow channel, in which the direction of flow is crosswise to the direction of flow in the wedge-shaped sections 6, and wherein a fist printed circuit board 16a and a second printed circuit board 16b are arranged in a wedge-shaped space defined by the inner wall 9 and the cover part 2, said wedge-shaped space tapering in a direction that is opposite to the direction in which the first and second channel sections taper. The first printed circuit board 16a and the second printed circuit boards 16b being arranged at different distances from the cover part 2.

The embodiment shown in fig. 6 refers to a flow heater, comprising a housing comprising a base part 1 and a cover part 2, a channel for liquid to be heated, which extends from an inlet 4 to an outlet 5, a heating plate 8 adjacent to the channel, fins 20 arranged in the channel in contact with the heating plate 8, and a printed circuit board 16 arranged between an inner wall 9 of the housing and the cover part 2, wherein the inner wall 9 has at least one section that is slanted with respect to the heating plate 8, between the heating plate 8 and the inner wall 9 the channel has a first wedge-shaped section downstream of the inlet and a second wedge-shaped section 6 leading to the outlet 5, both wedge-shaped sections tapering from an end of the heating plate 8 adjacent to the inlet 4 and the outlet 5 to an opposite end, wherein said wedge-shaped sections are connected by a middle section of the flow channel, in which the direction of flow is crosswise to the direction of flow in the wedge-shaped sections 6, and wherein a printed circuit board 16 is arranged in a wedge-shaped space defined by the inner wall 9 and the cover part 2, said wedge-shaped space tapering in a direction that is opposite to the direction in which the first and second channel sections taper. The printed circuit board is arranged adjacent to the cover 2, in parallel with the cover 2, and provided with components, e.g. a capacitor on a surface facing away from the cover 2.

### List of reference signs

1 base part
1a short side
1b short side
1c long side
1d long side
2 cover part
3 cover part
4 inlet
5 outlet
6 section of channel
7 section of channel
8 heating plate
9 inner wall
10 arrow
11 section of inner wall
12 arrow
13 arrow
14 middle section of channel
15 wedge-shaped space
16 printed circuit board
16a printed circuit board
16b printed circuit board
18 capacitor
19 gap
20 fins

## Claims

1. Flow heater, comprising
a housing comprising a base part (1) and a cover part (2),
a channel for liquid to be heated, which extends from an inlet (4) to an outlet (5),
a heating plate (8) adjacent to the channel,
fins (20) arranged in the channel in contact with the heating plate (8), and
a printed circuit board (16) arranged between an inner wall (9) of the housing and the cover part (2),
wherein the inner wall (9) has at least one section that is slanted with respect to the heating plate (8),
**characterized in that**
between the heating plate (8) and the inner wall (9) the channel has a first wedge-shaped (7) section downstream of the inlet and a second wedge-shaped section (6) leading to the outlet (5), both wedge-shaped sections (6, 7) tapering from an end of the heating plate (8) adjacent to the inlet (4) and the outlet (5) to an opposite end,
wherein said wedge-shaped sections (6, 7) are connected along the length of the first wedge-shaped section (6) by a middle section (14) of the flow channel, in which the direction of flow is crosswise to the direction of flow in the wedge-shaped sections (6, 7),
the printed circuit board (16) is slanted with respect to the heating plate (8), and
the printed circuit board (16) is slanted with respect to the cover part (2) and arranged in a wedge-shaped space (15) defined by the inner wall (9) and the cover part (2), said wedge-shaped space (15) tapering in a direction that is opposite to the direction in which the first and second wedge-shaped channel sections (6, 7) taper.

2. Flow heater according to claim 1, wherein the cover part (2) and the heating plate (8) are parallel to each other.

3. Flow heater according to any one of the preceding claims, wherein a capacitor (18) is arranged on the printed circuit board (16) in an end section of the printed circuit board (16) facing away from the inlet (4) and the outlet (5).

4. Flow heater according to any one of the preceding claims, wherein the printed circuit board (16) and the heating plate (8) are arranged at an angle of 3° to 10° with respect to each other.

5. Flow heater according to any one of the preceding claims, wherein a gap (19) between the inner wall (9) and the printed circuit board (16) is wedge-shaped, said gap (19) tapering towards the inlet (4) and the outlet (5).

6. Flow heater according to any one of the preceding claims, wherein the fins (20) are oriented crosswise to the direction of tapering of the wedge-shaped sections (6) of the channel.

7. Flow heater according to any one of the preceding claims, comprising a second cover part (3) that covers a surface of the heating plate (8) facing away from the channel.

8. Flow heater according to claim 7, wherein both cover parts (2, 3) are parallel to each other.

9. Flow heater according to claim 7 or 8, wherein the base part (1) has two opposing short sides (1a, 1b) and two opposing long sides (1c, 1d), said two short sides (1a, 1b) and said two long sides connecting to the cover parts (2, 3).

10. Flow heater according to claim 9, wherein both the inlet (4) and the outlet (5) are arranged on the same short side (1a) of the base part (1).

11. Flow heater according to any one of the preceding claims, wherein the housing is cuboid-shaped.

12. Flow heater according to any one of the preceding claims, wherein the channel comprises a middle section (14) that has a constant height and connects the wedge-shaped sections (6, 7).

## Patentansprüche

1. Durchlauferhitzer mit
einem Gehäuse mit einem Basisteil (1) und einem Abdeckteil (2),
einem Kanal für zu erwärmende Flüssigkeit, der sich von einem Einlass (4) zu einem Auslass (5) erstreckt.
einer an den Kanal angrenzenden Heizplatte (8),
im Kanal angeordneten Rippen (20), die mit der Heizplatte (8) in Kontakt stehen, und
einer zwischen einer Innenwand (9) des Gehäuses und dem Abdeckteil (2) angeordnete Leiterplatte (16),
wobei die Innenwand (9) mindestens einen Abschnitt aufweist, der in Bezug auf die Heizplatte (8) geneigt ist, **dadurch gekennzeichnet, dass**
zwischen der Heizplatte (8) und der Innenwand (9) der Kanal einen ersten keilförmigen Abschnitt (7) stromabwärts des Einlasses und einen zweiten keilförmigen Abschnitt (6) aufweist, der zum Auslass (5) führt, wobei sich beide keilförmigen Abschnitte (6, 7) von einem an den Einlass (4) und den Auslass (5) angrenzenden Ende der Heizplatte (8) zu einem gegenüberliegenden Ende verjüngen,
wobei die keilförmigen Abschnitte (6, 7) entlang der Länge des ersten keilförmigen Abschnitts (6) durch einen Mittelabschnitt (14) des Strömungskanals verbunden sind, in dem die Strömungsrichtung quer zur Strömungsrichtung in den keilförmigen Abschnitten (6, 7) verläuft,
die Leiterplatte (16) in Bezug auf die Heizplatte (8) geneigt ist und
die Leiterplatte (16) in Bezug auf das Abdeckteil (2) geneigt und in einem keilförmigen Raum (15) angeordnet ist, der durch die Innenwand (9) und das Abdeckteil (2) definiert ist, wobei sich der keilförmige Raum (15) in einer Richtung verjüngt, die der Richtung entgegengesetzt ist, in der sich der erste und der zweite keilförmige Kanalabschnitt (6, 7) verjüngen.

2. Durchlauferhitzer nach Anspruch 1, wobei das Abdeckteil (2) und die Heizplatte (8) parallel zueinander sind.

3. Durchlauferhitzer nach einem der vorstehenden Ansprüche, wobei ein Kondensator (18) auf der Leiterplatte (16) in einem Endabschnitt der Leiterplatte (16) angeordnet ist, der vom Einlass (4) und vom Auslass (5) weg zeigt.

4. Durchlauferhitzer nach einem der vorstehenden Ansprüche, wobei die Leiterplatte (16) und die Heizplatte (8) in einem Winkel von 3° bis 10° zueinander angeordnet sind.

5. Durchlauferhitzer nach einem der vorstehenden Ansprüche, wobei ein Spalt (19) zwischen der Innenwand (9) und der Leiterplatte (16) keilförmig ausgebildet ist und sich der Spalt (19) zum Einlass (4) und zum Auslass (5) hin verjüngt.

6. Durchlauferhitzer nach einem der vorstehenden Ansprüche, wobei die Rippen (20) quer zur Verjüngungsrichtung der keilförmigen Abschnitte (6) des Kanals ausgerichtet sind.

7. Durchlauferhitzer nach einem der vorstehenden Ansprüche, mit einem zweiten Abdeckteil (3), das eine vom Kanal abgewandte Fläche der Heizplatte (8) abdeckt.

8. Durchlauferhitzer nach Anspruch 7, wobei beide Abdeckteile (2, 3) parallel zueinander sind.

9. Durchlauferhitzer nach Anspruch 7 oder 8, wobei das Basisteil (1) zwei gegenüberliegende kurze Seiten (1a, 1b) und zwei gegenüberliegende lange Seiten (1c, 1d) aufweist, wobei die beiden kurzen Seiten (1a, 1b) und die beiden langen Seiten mit den Abdeckteilen (2, 3) verbunden sind.

10. Durchlauferhitzer nach Anspruch 9, wobei sowohl der Einlass (4) als auch der Auslass (5) an derselben kurzen Seite (1a) des Basisteils (1) angeordnet sind.

11. Durchlauferhitzer nach einem der vorstehenden Ansprüche, wobei das Gehäuse quaderförmig ist.

12. Durchlauferhitzer nach einem der vorstehenden Ansprüche, wobei der Kanal einen Mittelabschnitt (14) umfasst, der eine konstante Höhe aufweist und die keilförmigen Abschnitte (6, 7) verbindet.

## Revendications

1. Réchauffeur à circulation, comprenant
un boîtier comprenant une partie de base (1) et une partie couvercle (2),
un canal pour le liquide à chauffer, qui s'étend d'une entrée (4) à une sortie (5). une plaque chauffante (8) adjacente au canal,
des ailettes (20) disposées dans le canal en contact avec la plaque chauffante (8), et
une carte de circuit imprimé (16) disposée entre une paroi intérieure (9) du boîtier et la partie couvercle (2),
dans lequel la paroi intérieure (9) comporte au moins une section qui est inclinée par rapport à la plaque chauffante (8), **caractérisé en ce que**,
entre la plaque chauffante (8) et la paroi intérieure (9), le canal comporte une première section en forme de cale (7) en aval de l'entrée et une seconde section en forme de cale (6) menant à la sortie (5), les deux sections en forme de cale (6, 7) se rétrécissant depuis une extrémité de la plaque chauffante (8) adjacente à l'entrée (4) et à la sortie (5) vers une extrémité opposée,
lesdites sections en forme de cale (6, 7) étant reliées sur la longueur de la première section en forme de cale (6) par une section médiane (14) du canal d'écoulement, dans laquelle la direction d'écoulement est transversale à la direction d'écoulement dans les sections en forme de cale (6, 7),
la carte de circuit imprimé (16) est inclinée par rapport à la plaque chauffante (8), et
la carte de circuit imprimé (16) est inclinée par rapport à la partie couvercle (2) et disposée dans un espace en forme de cale (15) défini par la paroi intérieure (9) et la partie couvercle (2), ledit espace en forme de cale (15) se rétrécissant dans une direction opposée à la direction dans laquelle la première section et la seconde section de canal en forme de cale (6, 7) se rétrécissent.

2. Réchauffeur à circulation selon la revendication 1, dans lequel la partie couvercle (2) et la plaque chauffante (8) sont parallèles l'une à l'autre.

3. Réchauffeur à circulation selon l'une quelconque des revendications précédentes, dans lequel un condensateur (18) est disposé sur la carte de circuit imprimé (16) dans une section d'extrémité de la carte de circuit imprimé (16) opposée à l'entrée (4) et à la sortie (5).

4. Réchauffeur à circulation selon l'une quelconque des revendications précédentes, dans lequel la carte de circuit imprimé (16) et la plaque chauffante (8) sont disposées à un angle de 3° à 10° l'une par rapport à l'autre.

5. Réchauffeur à circulation selon l'une quelconque des revendications précédentes, dans lequel un espace (19) entre la paroi intérieure (9) et la carte de circuit imprimé (16) est en forme de cale, ledit espace (19) se rétrécissant vers l'entrée (4) et la sortie (5).

6. Réchauffeur à circulation selon l'une quelconque des revendications précédentes, dans lequel les ailettes (20) sont orientées transversalement par rapport à la direction de rétrécissement des sections en forme de cale (6) du canal.

7. Réchauffeur à circulation selon l'une quelconque des revendications précédentes, comprenant une seconde partie couvercle (3) qui recouvre une surface de la plaque chauffante (8) opposée au canal.

8. Réchauffeur à circulation selon la revendication 7, dans lequel les deux parties couvercle (2, 3) sont parallèles l'une à l'autre.

9. Réchauffeur à circulation selon les revendications 7 ou 8, dans lequel la partie de base (1) comporte deux côtés courts opposés (1a, 1b) et deux côtés longs opposés (1c, 1d), lesdits deux côtés courts (1a, 1b) et lesdits deux côtés longs se raccordant aux parties couvercle (2, 3).

10. Réchauffeur à circulation selon la revendication 9, dans lequel l'entrée (4) et la sortie (5) sont toutes deux disposées sur le même côté court (1a) de la partie de base (1).

11. Réchauffeur à circulation selon l'une quelconque des revendications précédentes, dans lequel le boîtier est de forme cuboïde.

12. Réchauffeur à circulation selon l'une quelconque des revendications précédentes, dans lequel le canal comprend une section centrale (14) dont la hauteur est constante et relie les sections en forme de cale (6, 7).
